# EUROPÄISCHE PATENTSCHRIFT

(11) **EP 2 061 982 B1**
(45) Veröffentlichungstag und Bekanntmachung des Hinweises auf die Patenterteilung: **06.10.2010**
(21) Anmeldenummer: 07802079.9
(22) Anmeldetag: 03.09.2007
(51) Int. Cl.: F16K 11/07

(54) **VORRICHTUNG ZUR VAKUUMERZEUGUNG**
DEVICE FOR VACUUM GENERATION
DISPOSITIF DE PRODUCTION D'UN VIDE

(43) Veröffentlichungstag der Anmeldung: 27.05.2009
(73) Patentinhaber: FESTO AG & Co. KG, 73734 Esslingen (DE)
(72) Erfinder: BRENNER, Jakob, 73730 Esslingen (DE); BOGDANOWICZ, Grzegorz, 73760 Ostfildern (DE)
(74) Vertreter: Abel, Martin
(86) Internationale Anmeldenummer: PCT/EP2007/007662
(87) Internationale Veröffentlichungsnummer: WO 2009/030244

(56) Entgegenhaltungen:
- DE-A1- 10 009 167
- US-A- 3 516 442

## Beschreibung

Die Erfindung betrifft eine Vorrichtung zur Vakuumerzeugung, mit einer elektrisch betätigbaren Ventileinrichtung, deren Ventilglied in der Lage ist, einen zur Speisung einer in einem Saugmittel einen Unterdruck erzeugenden Ejektoreinrichtung dienenden Arbeitskanal wahlweise in einer Grundstellung von einem an eine Druckluftquelle anschließbaren Speisekanal abzutrennen oder in einer Arbeitsstellung mit diesem Speisekanal zu verbinden.

Eine aus der DE 10009167 B4 bekannte Vakuumerzeugervorrichtung dieser Art enthält eine von einem 2/2-Wege-Steuerventil gebildete Ventileinrichtung, die den Eingang einer Ejektoreinrichtung wahlweise mit einem an eine Druckluftquelle angeschlossenen Speisekanal verbinden (Arbeitsstellung) oder von diesem Speisekanal abtrennen kann (Grundstellung). In der Arbeitsstellung ruft die die Ejektoreinrichtung durchströmende Druckluft in einem saugseitig an die Ejektoreinrichtung angeschlossenen Saugmittel, beispielsweise ein Saugnapf, einen Unterdruck hervor, durch den ein zu transportierender Gegenstand festgehalten werden kann. Ein Drucksensor überwacht den Unterdruck und schaltet die Ventileinrichtung zwecks Einsparung von Druckluft in die Grundstellung, wenn der Unterdruck eine gewünschte Höhe erreicht hat. Sollte der Unterdruck im Laufe der Zeit abfallen, wird dies durch neuerliches Umschalten der Ventileinrichtung in die Arbeitsstellung kompensiert.

Tritt während des Betriebes der bekannten Vorrichtung ein Stromausfall auf, kann dies nachteilige Folgen haben. Wenn die Ventileinrichtung vom Typ "normalerweise geschlossen" ist und sich zum Zeitpunkt des Stromausfalls bei angesaugtem Gegenstand in der Grundstellung befindet, ist bei einem in dem Saugmittel auftretenden Druckabfall keine Kompensation mehr möglich, weil die Grundstellung beibehalten wird. Ein angesaugter Gegenstand kann deshalb herabfallen. Ist die Ventileinrichtung vom Typ "normalerweise offen", führt der oben erwähnte Stromausfall zu einem Umschalten in die Arbeitsstellung, was zwar ein Herabfallen des angesaugten Gegenstandes verhindert, jedoch eine ständige Druckluftversorgung der Ejektoreinrichtung zur Folge hat und mithin einen nicht unbeträchtlichen Luftverbrauch.

Es ist daher eine Aufgabe der vorliegenden Erfindung, Maßnahmen vorzusehen, die einen luftsparenden Betrieb ermöglichen, ohne bei einem Stromausfall das Abfallen eines zuvor angesaugten Gegenstandes zu riskieren.

Zur Lösung dieser Aufgabe ist in Verbindung mit den eingangs genannten Merkmalen vorgesehen, dass der Speisekanal und der Arbeitskanal zu einem elektropneumatisch vorgesteuerten Hauptventil gehören, an dessen Ventilglied zwei einander entgegengesetzt orientierte und jeweils eine Vorsteuerkammer begrenzende Betätigungsflächen unterschiedlicher Größe angreifen, die zum Umschalten zwischen der Grundstellung und der Arbeitsstellung durch je eines von zwei elektropneumatischen Vorsteuerventilen der Ventileinrichtung mit in die jeweils zugeordnete Vorsteuerkammer eingespeister, unter einem Steuerdruck stehender Steuerluft beaufschlagbar sind, wobei die die größere Betätigungsfläche beaufschlagende Steuerluft in Richtung der Arbeitsstellung wirkt, und dass das Ventilglied durch Federmittel axial nachgiebig bezüglich der größeren Betätigungsfläche abgestützt ist, derart, dass das Ventilglied ausgehend von der Arbeitsstellung durch gleichzeitige Steuerluftbeaufschlagung beider Betätigungsflächen relativ zu der ihre Position beibehaltenden größeren Betätigungsfläche unter gleichzeitigem Spannen der Federmittel in die Grundstellung verlagerbar ist und im Falle eines anschließend von den Vorsteuerventilen in beiden Vorsteuerkammern verursachten Abfalls des Steuerdruckes durch die sich wieder entspannenden Federmittel in die Arbeitsstellung zurückgeschaltet wird.

Auf diese Weise ergibt sich der Vorteil, dass ein risikoloser Betrieb ohne unnötigen Luftverbrauch möglich ist, und zwar nicht nur während der normalen Betriebsweise, sondern auch im Falle einer durch einen Stromausfall hervorgerufenen Störung. Das Ventilglied des Hauptventils wird durch zwei elektropneumatische Vorsteuerventile betätigt, wobei durch aufeinander abgestimmte elektrische Ansteuerung die Arbeitsstellung des Ventilgliedes hervorgerufen wird, wenn in einem an den Arbeitskanal angeschlossenen Saugmittel ein das Ansaugen eines Gegenstandes hervorrufender Unterdruck erzeugt werden soll. Zum Einsparen von Druckluft kann das Ventilglied nach Aufbau eines ausreichend hohen Unterdruckes in die Grundstellung zurückgeschaltet werden. Hierbei handelt es sich jedoch nicht um die normale Grundstellung, sondern um eine durch die Federmittel vorgespannte Grundstellung. Diese beiden Grundstellungen unterscheiden sich nur im Beaufschlagungszustand des Ventilgliedes und nicht in ihrer eingenommenen Position. In der vorgespannten Grundstellung steht das Ventilglied unter der Vorspannung der beim Umschalten in die vorgespannte Grundstellung gespannten Federmittel, die das Ventilglied wieder in die Arbeitsstellung zurückschalten, falls in den beiden Vorsteuerkammern aufgrund eines Stromausfalls ein gleichzeitiger Druckabfall auftreten sollte. Durch das Umschalten in die Arbeitsstellung wird eine angeschlossene Ejektoreinrichtung gespeist, sodass trotz Stromausfall ein Absinken des Unterdruckes und daraus resultierend ein Abfallen eines zuvor angesaugten Gegenstandes verhindert wird. Da für diese Sicherheitsfunktion keine elektrische Energie benötigt wird, liegt bei geringem fertigungstechnischen Aufwand ein hoher Sicherheitsstandard vor.

Vorteilhafte Weiterbildungen der Erfindung gehen aus den Unteransprüchen hervor.

Zweckmäßigerweise wird das Umschalten des Ventilgliedes aus der vorgespannten Grundstellung in die Arbeitsstellung durch Verzögerungsmittel hervorgerufen, die bei gleichzeitiger Entlüftung der beiden Vorsteuerkammern eine unterschiedliche Entlüftungsdauer hervorrufen. Dies bewirkt eine fluidische Abstützung der größeren Betätigungsfläche relativ zu der kleineren Betätigungsfläche, sodass sich das Ventilglied relativ zu der zumindest im Wesentlichen ihre Position beibehaltenden größeren Betätigungsfläche in die Arbeitsstellung zurückverlagert.

Am einfachsten lassen sich die Verzögerungsmittel dadurch realisieren, dass man die beiden Vorsteuerkammern in einer Weise auslegt, dass ihre Kammervolumina bei in der vorgespannten Grundstellung befindlichem Ventilglied unterschiedlich groß sind. Da die eine Betätigungsfläche sowieso größer ist als die andere Betätigungsfläche, erreicht man dies leicht durch Verwirklichung von Vorsteuerkammern mit in der vorgespannten Grundstellung gleicher Länge, jedoch entsprechend ihren Betätigungsflächen unterschiedlich großen Querschnitten. Beim Entlüften ist dadurch auf der Seite der größeren Betätigungsfläche ein größeres Luftvolumen zu entlüften als auf der Seite der kleineren Betätigungsfläche. Dies hat die erwähnte unterschiedliche Entlüftungsdauer zur Folge und das damit zusammenhängende Zurückschalten des Ventilgliedes in die Arbeitsstellung.

Bei Bedarf können die beiden zwischen den Vorsteuerventilen und den Vorsteuerkammern verlaufenden Vorsteuerkanäle zur Realisierung von Verzögerungsmitteln für unterschiedliche Entlüftungs-Strömungsraten ausgelegt sein. Hierzu kann in den der größeren Betätigungsfläche zugeordneten Vorsteuerkanal eine Drosseleinrichtung eingeschaltet sein, insbesondere in einer Kombination mit einem Rückschlagventil. Allerdings ist zu bedenken, dass sich eine solche Drosseleinrichtung auch auf die normale Umschaltgeschwindigkeit des Ventilgliedes auswirken kann.

Die Federmittel sind vorzugsweise mechanischer Art. Besonders zweckmäßig ist eine Ausgestaltung als Schraubendruckfeder.

Zumindest die größere Betätigungsfläche ist dem Ventilglied zweckmäßigerweise axial vorgelagert. Sie kann hierbei an einem bevorzugt nach Art eines Kolbens ausgebildeten Betätigungsglied angeordnet sein. Das die größere Betätigungsfläche aufweisende Betätigungslied ist in der Umschaltrichtung des Ventilgliedes relativ zu diesem bewegbar, um die durch die Nachgiebigkeit der Federmittel bedingte Relativbewegung zwischen der größeren Betätigungsfläche und dem Ventilglied zu ermöglichen.

Um eine kontrollierte Kraftübertragung der Federmittel zu ermöglichen, ist es von Vorteil, wenn sich Letztere einerseits an dem Ventilglied und andererseits an einem axial verschiebbar mit dem Ventilglied in Eingriff stehenden Schubglied abstützen, wobei das Schubglied mit der größeren Betätigungsfläche in Wirkverbindung steht. Das Schubglied kann auf diese Weise je nach Kompressionszustand der Federmittel mehr oder weniger weit in das Ventilglied eintauchen, wobei es an diesem verschiebbar geführt ist. Um den Ausfahrhub zu begrenzen, können geeignete Anschlagmittel am Ventilglied und am Schubglied vorhanden sein. Ist das Schubglied zumindest über einen Teil seiner Länge hülsenförmig ausgebildet, können die Federmittel in es eintauchen.

Die Arbeitsstellung des Ventilgliedes wird insbesondere dadurch definiert, dass der Verstellweg eines die größere Betätigungsfläche aufweisenden Betätigungsgliedes begrenzt wird. Eine fest mit einem Ventilgehäuse der Ventileinrichtung verbundene Anschlagfläche kann zu diesem Zweck vorgesehen sein, auf die das Betätigungsglied aufläuft. Solange die kleinere Betätigungsfläche nicht mit Steuerluft beaufschlagt ist, wird die Stellkraft über die dazwischengeschalteten, nicht oder nur geringfügig komprimierten Federmittel von der größeren Betätigungsfläche auf das Ventilglied übertragen, sodass sich diese Komponenten wie ein einziges Bauteil bewegen können.

Das Hauptventil enthält zweckmäßigerweise auch noch einen Ausblaskanal, in den in einer Ausblasstellung des Ventilgliedes von einem weiteren Speisekanal stammende Druckluft ausgeblasen wird, um dem daran angeschlossenen Saugmittel einen sogenannten Abwurfimpuls aufzuerlegen, der dafür sorgt, dass der bis dahin herrschende Unterdruck schlagartig aufgehoben und ein anhaftender Gegenstand abgelegt oder abgeworfen wird.

Ein einziges Ventilglied ist dadurch in der Lage, alternativ eine der drei Schaltstellungen "Grundstellung", "Arbeitsstellung" oder "Ausblasstellung" einzunehmen, was eine sehr kompakte Ventileinrichtung ermöglicht. Je nach Betriebszustand ist die Grundstellung hierbei außerdem entweder eine normale Grundstellung ohne gespannte Federmittel oder eine vorgespannte Grundstellung mit gespannten Federmitteln.

Die Ausblasstellung ist zweckmäßigerweise dadurch definiert, dass sich die größere Betätigungsfläche an einem Ventilgehäuse der Ventileinrichtung abstützt und dadurch nicht weiter zurückweichen kann, wenn auf der entgegengesetzten Seite die kleinere Betätigungsfläche mit Steuerdruck beaufschlagt wird. Die Beaufschlagung der kleineren Betätigungsfläche sorgt dabei wiederum für ein Spannen der Federmittel, sodass es zum anschließenden Zurückschalten in die normale Grundstellung ausreicht, die der kleineren Betätigungsfläche zugeordnete Vorsteuerkammer zu entlüften.

Die Ventileinrichtung ist zweckmäßigerweise an einer Arbeitseinheit angeordnet, die mit mindestens einer Ejektoreinrichtung ausgestattet ist, deren Eingang mit dem Speisekanal verbunden ist und die saugseitig ausgebildet ist, um ein Saugmittel, beispielsweise einen Saugnapf, anschließen zu können. Der gegebenenfalls vorhandene Ausblaskanal ist hier zweckmäßigerweise an die Saugseite der Ejektoreinrichtung angeschlossen, allerdings nach einem Rückschlagventil, das während der vorgespannten Grundstellung des Ventilgliedes dafür sorgen soll, dass der aufgebaute Unterdruck beibehalten wird.

Zur Überwachung des Unterdruckes enthält die Vorrichtung zweckmäßigerweise eine Drucksensoreinrichtung, auf Basis deren Signale die Vorsteuerventile in der gewünschten Weise betätigt werden.

Nachfolgend wird die Erfindung anhand der beiliegenden Zeichnung näher erläutert. In dieser zeigen:

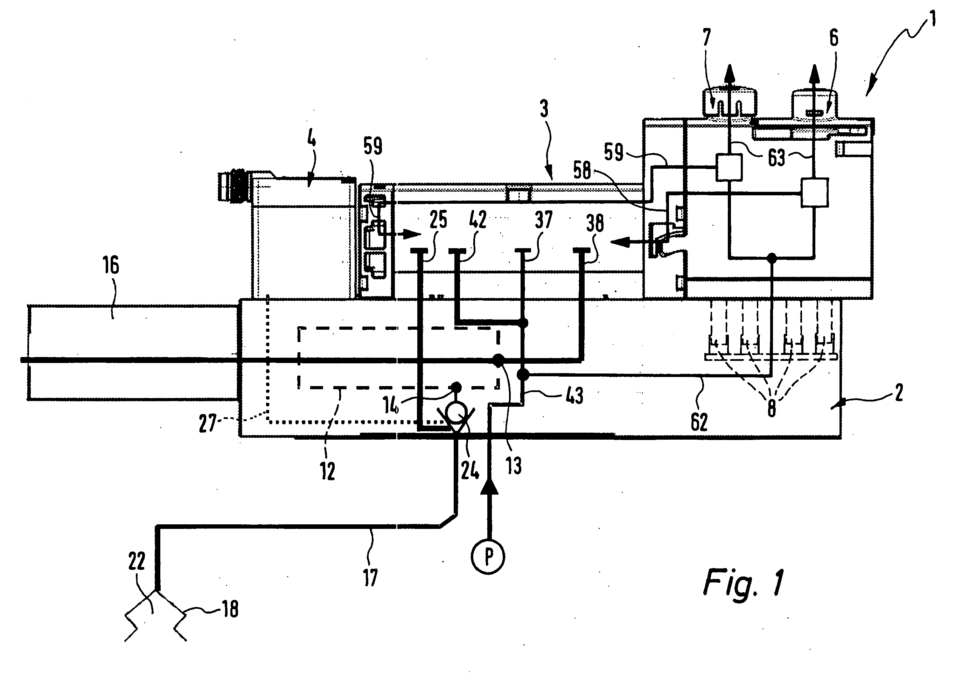

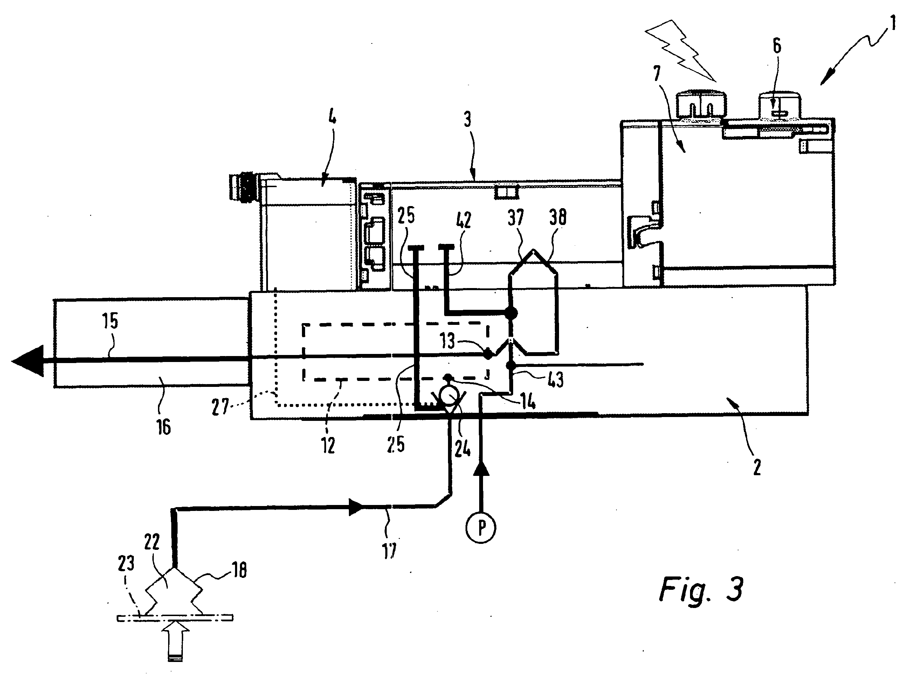

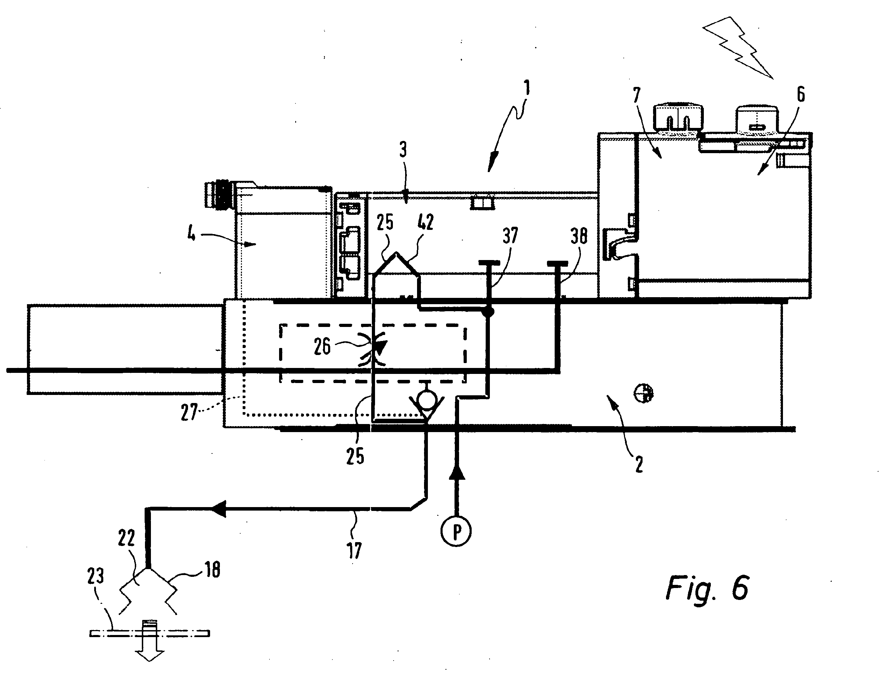

- Figuren 1, 3 und 6: je eine schematische Seitenansicht der erfindungs- gemäßen Vakuumerzeugervorrichtung in unterschiedli- chen Betriebszuständen, wobei die Kanalführung der durch die Ventileinrichtung gesteuerten Kanäle schematisch angedeutet ist und wobei die Figur 1 die normale Grundstellung, die Figur 3 die Arbeits- stellung und die Figur 6 die Ausblasstellung zeigt, und

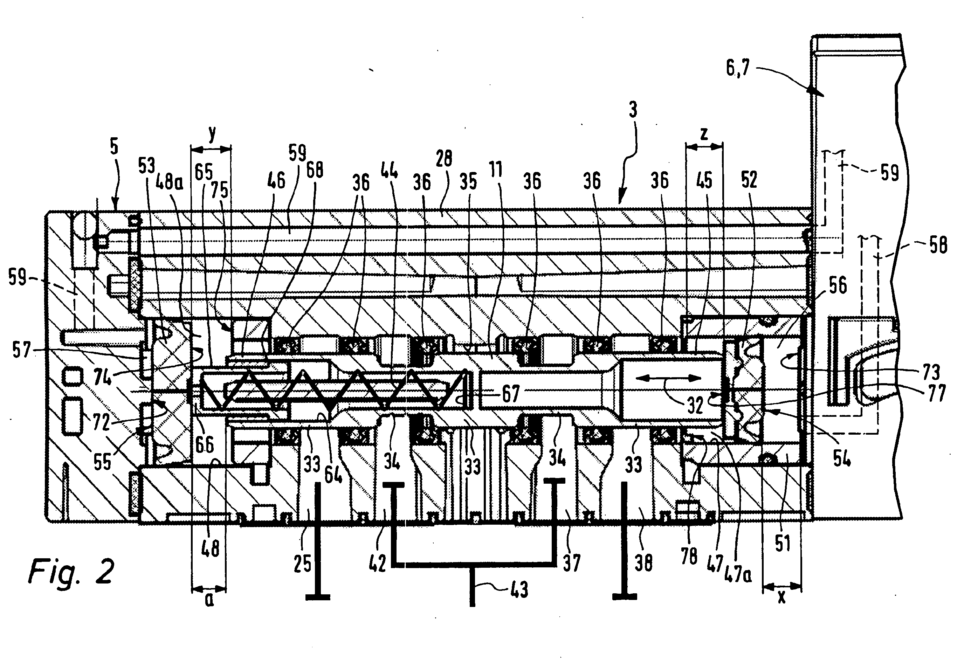

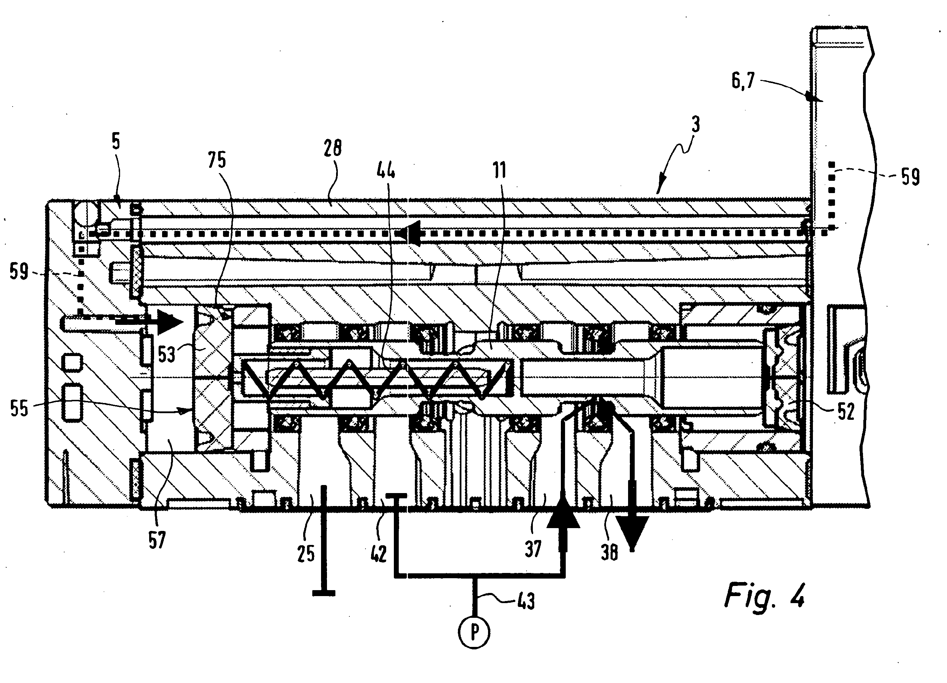

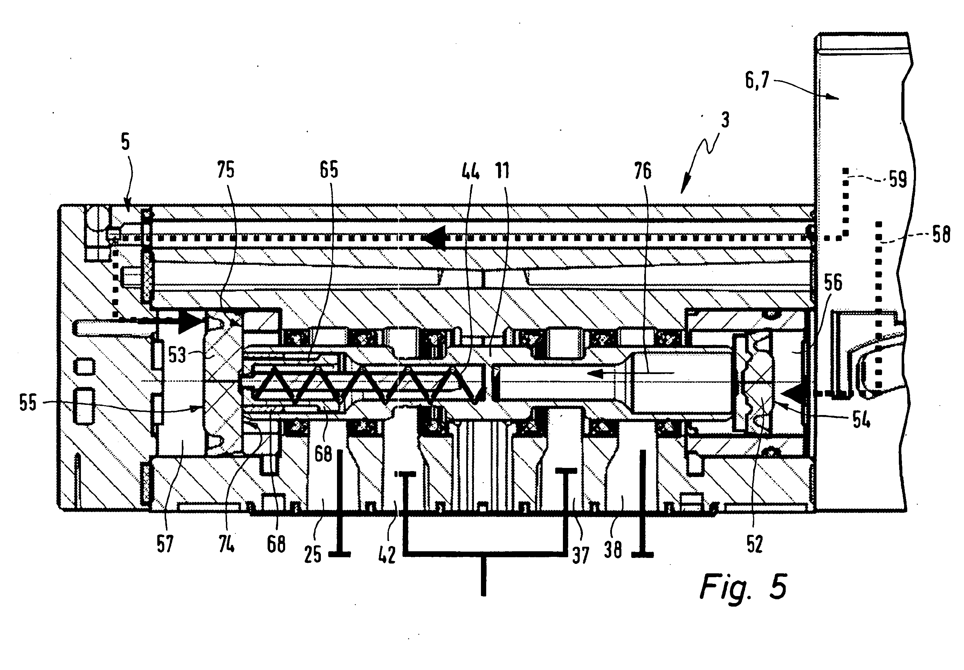

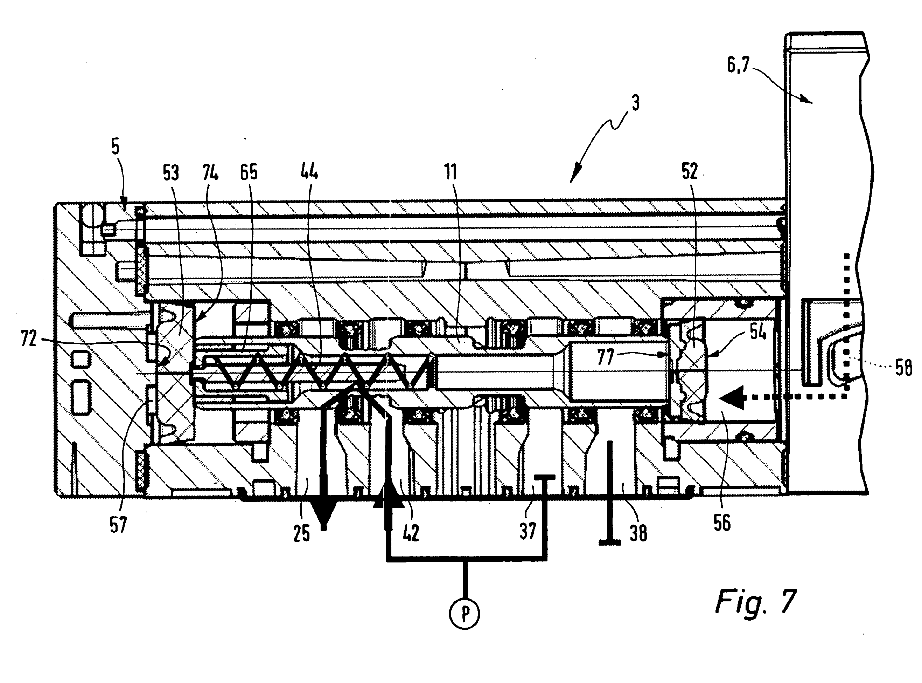

- Figuren 2, 4, 5, 7 und 8: je eine Einzeldarstellung der Ventileinrichtung in partiellem Längsschnitt, wobei das Ventilglied in Figur 2 die normale Grundstellung, in Figur 4 die Arbeitsstellung, in Figur 5 die vorgespannte Grund- stellung, in Figur 7 die Ausblasstellung und in Fi- gur 8 die vorgespannte Grundstellung in der Phase unmittelbar vor dem Übergang in die Arbeitsstellung zeigt.

Die in ihrer Gesamtheit mit Bezugsziffer 1 bezeichnete Vorrichtung zur Vakuumerzeugung umfasst beispielhaft eine bevorzugt blockartige Arbeitseinheit 2, an die eine Ventileinrichtung 3 sowie eine Drucksensoreinrichtung 4 angebaut sind.

Die in Figuren 2, 4, 5, 7 und 8 nochmals gesondert in einer Teildarstellung gezeigte Ventileinrichtung 3 ist von vorgesteuerter Bauart und insbesondere als Baueinheit ausgeführt, die sich aus einem Hauptventil 5 sowie einem ersten und einem zweiten elektropneumatischen Vorsteuerventil 6, 7 zusammensetzt. Die Vorsteuerventile 6, 7 können in einer einseitig an das Hauptventil 5 angebauten Vorsteuereinheit zusammengefasst sein.

Bei den beiden Vorsteuerventilen 6, 7 handelt es sich jeweils um ein 3/2-Wegeventil. Sie erhalten ihre elektrischen Betätigungssignale über lediglich in Figur 1 angedeutete elektrische Schnittstellenmittel 8, wobei sie individuell ansteuerbar sind. Der Betätigungszustand der Vorsteuerventile 6, 7 gibt den aktuellen Betriebszustand des Hauptventils 5 und mithin die Schaltstellung eines in diesem angeordneten Ventilgliedes 11 vor.

Die Arbeitseinheit 2 ist mit einer gestrichelt angedeuteten Ejektoreinrichtung 12 ausgestattet, die über einen Eingang 13 mit Druckluft speisbar ist, die beim Hindurchströmen durch die Ejektoreinrichtung 12 an einem Saugausgang 14 eine Absaugwirkung hervorruft. Die durch die Ejektoreinrichtung 12 hindurchströmende Druckluft tritt gemäß Pfeil 15 zur Atmosphäre aus, insbesondere durch einen an die Arbeitseinheit 2 angebauten Schalldämpfer 16 hindurch.

An den Saugausgang 14 ist direkt oder über eine Saugleitung 17 ein schematisch angedeutetes Saugmittel 18 angeschlossen. Bei dem Saugmittel 18 handelt es sich beispielsweise um einen Saugnapf oder um einen Saugteller. Es begrenzt einen einseitig offenen Saugraum 22, der durch einen in Figur 3 strichpunktiert angedeuteten, anzuhebenden Gegenstand 23 abgedeckt wird, wenn das Saugmittel 18 daran angesetzt wird. Die saugseitig an der Ejektoreinrichtung 12 auftretende Absaugwirkung bewirkt eine Evakuierung des Saugraumes 22 und daraus resultierend ein Festhalten des Gegenstandes 23 durch Unterdruck.

Ein zwischen dem Saugausgang 14 und dem Saugmittel 18 in den Verlauf der Saugleitung 17 eingeschaltetes Rückschlagventil 24 lässt eine Luftströmung nur in der Saugrichtung durch. Folglich sorgt es dafür, dass das sich im Saugraum 22 aufgebaute Vakuum auch bei abgeschalteter Ejektoreinrichtung 12 beibehalten wird.

An die Saugleitung 17 ist zwischen dem Rückschlagventil 24 und dem Saugmittel 18 ein Ausblaskanal 25 angeschlossen. Durch ihn hindurch kann unter atmosphärischem Überdruck stehende Druckluft in die Saugleitung 17 eingespeist werden, um das im Saugraum 22 herrschende Vakuum aufzuheben und den Gegenstand 23 abzuwerfen. Um die Intensität des Abwurfimpulses variieren zu können, kann in den Ausblaskanal 26 eine einstellbare Drosseleinrichtung 26 eingeschaltet sein (Figur 6).

Von der erwähnten Drucksensoreinrichtung 4 wird über einen gepunktet angedeuteten Abgriffskanal 27 der in der Saugleitung 17 aktuell herrschende Druck abgegriffen. In Abhängigkeit vom Messergebnis kann die Drucksensoreinrichtung 4 an eine nicht weiter dargestellte elektronische Steuereinrichtung elektrische Druckerfassungssignale ausgeben. Auf Basis dieser elektrischen Signale steuert die elektronische Steuereinrichtung die beiden Vorsteuerventile 6, 7 an, um den situationsbedingt erforderlichen Betriebszustand der Vakuumerzeugervorrichtung 1 zu erhalten.

Die Ventileinrichtung 3 umfasst ein bevorzugt mehrteiliges Ventilgehäuse 28, in dem das oben erwähnte Ventilglied 11 zur Ausführung einer durch einen Doppelpfeil angedeuteten linearen Umschaltbewegung 32 linear verschiebbar untergebracht ist. Das Ventilglied 11 fungiert als Ventilschieber und besitzt einen länglichen, kolbenartigen Aufbau. Wie bei Mehrwegeventilen als solches üblich, ist das Ventilglied 11 in Längsrichtung mehrfach abgestuft und verfügt über eine abwechselnde Aneinanderreihung von Längenabschnitten größeren und kleineren Querschnittes 33, 34.

Das Ventilglied 11 erstreckt sich in einer länglichen Ausnehmung 35 des Ventilgehäuses 28 und kooperiert darin mit fest am Ventilgehäuse 28 angeordneten, axial beabstandeten ringförmigen Dichtungen 36. Befindet sich ein Längenabschnitt kleineren Querschnittes 34 auf axialer Höhe einer Dichtung 36, ist ein Fluidübertritt zwischen den beiden diese Dichtung flankierenden Abschnitten der länglichen Ausnehmung 35 möglich. Kommt ein Längenabschnitt größeren Querschnittes 33 in einer solchen Dichtung 36 zu liegen, ist der Durchgang abgesperrt und ein Fluidübertritt verhindert. Da das Funktionsprinzip demjenigen als solches bekannter Mehrwegeventile entspricht, erübrigen sich an dieser Stelle noch detailliertere Ausführungen.

In die das Ventilglied 11 aufnehmende Ausnehmung 35 münden seitlich, in je einen zwischen zwei Dichtungen 36 liegenden Ausnehmungsabschnitt, mehrere Fluidkanäle ein. Auf diese Weise mündet ein erster Speisekanal 37 axial neben einem Arbeitskanal 38 ein, und ein weiterer, zweiter Speisekanal 42 mündet in die Ausnehmung 35 neben dem schon erwähnten Ausblaskanal 25. Die beiden Speisekanäle 37, 42 sind über einen die Arbeitseinheit 2 durchsetzenden Zuführkanal 43 gemeinsam an eine Druckluftquelle P angeschlossen. Die Verzweigung kann innerhalb der Arbeitseinheit 2 oder innerhalb der Ventileinrichtung 3 stattfinden.

Bevorzugt münden die genannten Kanäle in derartiger axialer Reihenfolge in die Ausnehmung 35 ein, dass auf den Arbeitskanal 38 der erste Speisekanal 37 folgt, auf diesen der zweite Speisekanal 42 und auf diesen schließlich der Ausblaskanal 25.

Der Ausblaskanal 25 setzt sich in der schon erläuterten Weise in der Arbeitseinheit 2 fort und mündet in die Saugleitung 17. Der Arbeitskanal 38 setzt sich ebenfalls in der Arbeitseinheit 2 fort und führt dort zum Eingang 13 der Ejektoreinrichtung 12.

Je nach Schaltstellung des Ventilgliedes 11 ergibt sich eine unterschiedliche Verknüpfung der diversen Kanäle.

In der aus Figuren 1 und 2 ersichtlichen normalen Grundstellung sind alle in die Ausnehmung 35 einmündenden Kanäle 37, 38, 42, 25 durch das ventilglied 11 abgesperrt.

In einer aus Figuren 3 und 4 ersichtlichen Arbeitsstellung stellt das Ventilglied 11 eine Fluidverbindung zwischen dem ersten Speisekanal 37 und dem Arbeitskanal 38 her, während es gleichzeitig.weiterhin den zweiten Speisekanal 42 und den Ausblaskanal 25 absperrt. In diesem Betriebszustand strömt Druckluft aus der Druckluftquelle P über den Eingang 13 hinweg durch die Ejektoreinrichtung 12 hindurch und ruft an deren Saugausgang 14 die erwähnte Absaugwirkung hervor, aufgrund derer der Saugraum 22 evakuiert wird. Dieser Betriebszustand wird eingestellt, um einen zu transportierenden Gegenstand 23 fest anzusaugen.

Nachdem der gewünschte Unterdruck erreicht ist, schaltet das ventilglied 11 auf Basis der entsprechenden Druckerfassungssignale in die aus Figur 5 ersichtliche Luftsparstellung. Die Position des Ventilgliedes 11 in der Luftsparstellung ist mit derjenigen der Grundstellung identisch, unterscheidet sich allerdings im Beaufschlagungszustand des Ventilgliedes, das hier unter der Vorspannung von Federmitteln 44 steht. Daher wird die Luftsparstellung auch als vorgespannte Grundstellung bezeichnet.

In der Luftsparstellung beziehungsweise der vorgespannten Grundstellung sind wiederum alle seitlich in die Ausnehmung 35 einmündenden Kanäle 37, 38, 42, 25 abgesperrt. Die schaltungstechnische Situation stimmt dann mit derjenigen der Figur 1 überein, wobei nun allerdings in dem Saugraum 22 und dem sich bis zu dem Rückschlagventil 24 daran anschließenden Abschnitt der Saugleitung 17 ein den Gegenstand 23 festhaltender Unterdruck herrscht. Das Rückschlagventil 24 verhindert einen Abbau dieses Unterdruckes, sodass auch ohne fortgesetzten Betrieb der Ejektoreinrichtung 12 ein Festhalten des Gegenstandes 23 gewährleistet ist. Daraus resultiert ein luftsparender Effekt.

Falls die Drucksensoreinrichtung 4 aufgrund einer Leckage einen zu starken Abfall des Unterdruckes feststellen sollte, veranlasst sie ein neuerliches Umschalten des Ventilgliedes 11 in die Arbeitsstellung gemäß Figuren 3 und 4, bis der erforderliche Unterdruck wieder erreicht ist. Hier wird also mit anderen Worten der Unterdruck ständig auf ein gewisses Maß nachgeregelt.

Schließlich kann das ventilglied 11 auch noch in die aus Figuren 6 und 7 ersichtliche Ausblasstellung umgeschaltet werden. Hier ist der Arbeitskanal 38 vom ersten Speisekanal 37 abgetrennt und folglich die Ejektoreinrichtung 12 außer Betrieb gesetzt. Gleichzeitig liegt aber eine Verbindung zwischen dem zweiten Speisekanal 42 und dem Ausblaskanal 25 vor, sodass Druckluft in die Saugleitung 17 ausgeblasen wird, um den Unterdruck im Saugraum 22 aufzuheben und den bis dahin festgehaltenen Gegenstand 23 abzustoßen.

Hernach wird das Ventilglied 11 wieder in die normale Grundstellung gemäß Figuren 1 und 2 zurückgeschaltet, sodass die Vakuumerzeugervorrichtung 1 für einen neuen Handhabungszyklus zur Verfügung steht.

Das längliche Ventilglied 11 ragt mit seinen beiden stirnseitigen Endabschnitten 45, 46 in je einen Endabschnitt 47, 48 der Ausnehmung 35 hinein. Dort ist dem Ventilglied 11 jeweils ein Betätigungsglied 52, 53 axial vorgelagert. Das in der Zeichnung rechts liegende erste Betätigungsglied 52 verfügt dabei über einen geringeren Querschnitt als das entgegengesetzte, in der Zeichnung links liegende zweite Betätigungsglied 53. Diese unterschiedlichen Querschnitte korrespondieren mit daran angepassten, ebenfalls unterschiedlich großen Querschnitten der Endabschnitte 47, 48 der Ausnehmung 35.

Exemplarisch resultiert der kleinere Querschnitt des das erste Betätigungsglied 52 aufnehmenden ersten Endabschnittes 47 aus einem in den Gehäusekörper des Ventilgehäuses 28 eingesetzten Hülsenkörper 51. Allerdings könnte der erste Endabschnitt 47 auch unmittelbar durch den Gehäusekörper des Ventilgehäuses 28 gebildet sein.

Das erste Betätigungsglied 52 kleineren Durchmessers weist an seiner axial vom Ventilglied 11 wegweisenden Stirnseite eine erste Betätigungsfläche 54 auf. Über eine entgegengesetzt axial orientierte zweite Betätigungsfläche 55 verfügt das in dem zweiten Endabschnitt 48 größeren Querschnittes angeordnete zweite Betätigungsglied 53. Die Größe der Betätigungsflächen 54, 55 entspricht den Querschnittsflächen der zugeordneten Endabschnitte 47, 48. Daher ist die erste Betätigungsfläche 54 kleiner als die zweite Betätigungsfläche 55.

Die Betätigungsglieder 52, 53 unterteilen jeden Endabschnitt 47, 48 in eine dem Ventilglied 11 zugewandte rückseitige Kammer 47a, 48a sowie eine durch die zugeordnete Betätigungsfläche 54, 55 begrenzte, erste und zweite Vorsteuerkammer 56, 57. Von der ersten Vorsteuerkammer 56 führt ein erster Vorsteuerkanal 58 zu dem ersten Vorsteuerventil 6, während von der zweiten Vorsteuerkammer 57 ein zu dem zweiten Vorsteuerventil 7 führender zweiter Vorsteuerkanal 59 abgeht.

Gemäß der schematischen Darstellung in Figur 1 wird jedes Vorsteuerventil 6, 7 - beispielsweise aus dem Zuführkanal 43 - über einen Eingangskanal 62 mit Speiseluft versorgt. Der als Speisedruck bezeichenbare Druck dieser Speiseluft entspricht vorliegend demjenigen aus der Druckluftquelle P. Außerdem verfügt jedes Vorsteuerventil 6, 7 über einen Entlüftungskanal 63.

Aufgrund ihrer 3/2-Ventilfunktion ist jedes Vorsteuerventil 6, 7 in der Lage, den ihm zugeordneten Vorsteuerkanal 58, 59 entweder mit Speiseluft zu versorgen (Speisestellung) oder an die Atmosphäre zu entlüften (Entlüftungsstellung). Beim Ausführungsbeispiel sind die Vorsteuerventile 6, 7 so ausgelegt, dass sie im elektrisch deaktivierten Zustand, also wenn keine Betätigungsspannung anliegt, die Entlüftungsstellung einnehmen. Man spricht hier auch von Ventilen des Typs "normalerweise geschlossen", weil die Speiseluft im stromlosen Zustand abgesperrt ist.

In der Speisestellung eines Vorsteuerventils 6, 7 strömt die Speiseluft in die zugeordnete Vorsteuerkammer 56, 57 und beaufschlagt dort die zugeordnete Betätigungsfläche 54, 55. Folglich erfährt das Ventilglied 11 eine Umschaltkraft in der betreffenden Richtung. Aufgrund des Umstandes, dass die beiden Betätigungsflächen 54, 55 unterschiedlich groß sind, die Steuerdrücke jedoch gleichgroß sind, ist die auf das zweite Betätigungsglied 53 ausübbare fluidische Betätigungskraft größer als diejenige, die auf das erste Betätigungsglied 52 wirken kann.

Das erste Betätigungsglied 52 und mithin auch die daran angeordnete erste Betätigungsfläche 54 sind zweckmäßigerweise axial fest an dem Ventilglied 11 angeordnet, jedenfalls aber in einer in Richtung der Umschaltbewegung 32 unnachgiebigen Weise. Im Gegensatz dazu sind das Ventilglied 11 und das mit der größeren zweiten Betätigungsfläche 55 ausgestattete zweite Betätigungsglied 53 durch die schon erwähnten Federmittel 44 relativ zueinander axial nachgiebig abgestützt. Ohne Einwirkung äußerer Kräfte werden das zweite Betätigungsglied 53 und das Ventilglied 11 durch die nicht oder nur geringfügig vorgespannten Federmittel 44 in einem Ausgangsabstand "a" zueinander gehalten. Dabei ist die Steifigkeit der Federmittel 44 ausreichend groß, um dem zweiten Betätigungsglied 53 ein Verschieben des Ventilgliedes 11 ohne Komprimieren der Federmittel 44 zu ermöglichen, wenn keine entgegengesetzte Kraft auf das Ventilglied 11 einwirkt. Die Federmittel 44 sind also in der Lage, die bei Aktivierung des ersten Vorsteuerventils 6 an dem zweiten Betätigungsglied 53 erzeugten fluidischen Betätigungskräfte auf das Ventilglied 11 zu übertragen, um dieses zu verschieben, wobei der Ausgangsabstand "a" konstant bleibt.

An dieser Stelle sei angemerkt, dass die die größere zweite Betätigungsfläche 55 beaufschlagende Steuerluft unter Vermittlung des zweiten Betätigungsgliedes 53 in Richtung des Umschaltens in die Arbeitsstellung auf das Ventilglied 11 einwirkt.

Die Federmittel 44 könnten prinzipiell von einer Gasfeder, insbesondere einer Luftfeder, gebildet sein. Kostengünstiger und weniger störungsanfällig ist allerdings die beim Ausführungsbeispiel vorhandene Ausgestaltung als mechanische Federmittel, wobei sich insbesondere die Verwendung einer Schraubendruckfeder empfiehlt.

Das Ventilglied 11 verfügt über eine zu dem zweiten Betätigungsglied 53 hin offene sacklochartige Federaufnahmekammer 64, die an ihrer offenen Stirnseite von einem zumindest partiell hülsenförmig ausgebildeten Schubglied 65 verschlossen ist, das axial verschiebbar in die Federaufnahmekammer 64 eintaucht. Das Schubglied 65 kann insbesondere becherförmig ausgebildet sein und verfügt über eine dem zweiten Betätigungsglied 53 zugewandte Abschlusswand 66; an der sich die in die Federaufnahmekammer 65 eingesetzten und hierbei in das Schubglied 65 eintauchenden Federmittel 44 einenends axial abstützen. Die Abschlusswand könnte allerdings auch von dem zweiten Betätigungsglied 53 gebildet sein. Mit ihrem entgegengesetzten Ende stützen sich die Federmittel 44 an der Grundfläche 67 der Federaufnahmekammer 64 ab.

Miteinander kooperierende Anschlagmittel 68 am Ventilglied 11 und am Schubglied 65 definieren die maximal aus dem Ventilglied 11 ausgefahrene Position des Schubgliedes 65. Exemplarisch ist das Schubglied 65 hierzu mit einem Kragen versehen, der eine in das Ventilglied 11 eingepresste Anschlaghülse hintergreift.

Das Schubglied 65 ist relativ zu dem Ventilglied 11 in der Richtung der Umschaltbewegung 32 verschiebbar geführt und gegen Verkanten radial abgestützt.

Die Wirkungsweise dieser Maßnahmen wird im Folgenden erläutert.

In der normalen Grundstellung gemäß Figuren 1 und 2 ist das das Ventilglied 11 und die beiden Betätigungsglieder 52, 53 umfassende Steuerglied so weit in die Richtung des zweiten Endabschnittes 48 bewegt, dass das zweite Betätigungsglied 53 an der ihm axial gegenüberliegenden Abschlussfläche 72 der zweiten Vorsteuerkammer 57 anliegt. Das Kammervolumen der zweiten Vorsteuerkammer 57 ist hierbei nahezu Null. Das erste Betätigungsglied 52 ist gleichzeitig von der ihm axial gegenüberliegenden Abschlussfläche 73 der ersten Vorsteuerkammer 56 entfernt. Der axiale Abstand "x" entspricht hierbei zumindest im Wesentlichen dem axialen Abstand "y" zwischen der dem Ventilglied 11 zugewandten Rückfläche 74 des größeren zweiten Betätigungsgliedes 53 und der dieser axial gegenüberliegenden Begrenzungsfläche 75 der zugeordneten rückseitigen Kammer 48a.

Zum Umschalten in die Arbeitsstellung gemäß Figuren 3 und 4 bleibt das erste Vorsteuerventil 6 in der unbetätigten Entlüftungsstellung, während das zweite Vorsteuerventil 7 durch elektrische Aktivierung in die Speisestellung umgeschaltet wird. Somit wird die größere zweite Betätigungsfläche 55 mit Steuerluft beaufschlagt und das gesamte Steuerglied verschoben, bis durch Anlage des zweiten Betätigungsgliedes 53 an der Begrenzungsfläche 75 die Arbeitsstellung erreicht ist. Das erste Betätigungsglied 52 hat hierbei den axialen Abstand "x" zurückgelegt, sodass keine Gegenkraft aufgebaut wurde und das Schubglied 65 in der maximal ausgefahrenen Position verblieben ist. Die Federmittel 44 sind folglich nicht gespannt worden und haben lediglich die Betätigungskraft vom zweiten Betätigungsglied 53 auf das Ventilglied 11 übertragen.

Bei ausreichender Höhe des erzeugten Vakuums wird das Ventilglied 11 in die Luftsparstellung (vorgespannte Grundstellung) gemäß Figur 5 umgeschaltet. Hierzu werden ausgehend von der Arbeitsstellung beide Vorsteuerventile 6, 7 aktiviert, sodass beide Betätigungsflächen 54, 55 mit unter dem Steuerdruck stehender Steuerluft beaufschlagt werden. Bedingt durch seine größere zweite Betätigungsfläche 55 wird dabei das zweite Betätigungsglied 53 in der auch in der Arbeitsstellung vorliegenden Position festgehalten. Es wird durch die Steuerluft gegen die Begrenzungsfläche 75 gedrückt. Gleichzeitig ruft die auf die kleinere erste Betätigungsfläche 54 einwirkende Steuerluft ein Verschieben des Ventilgliedes 11 in Richtung des zweiten Betätigungsgliedes 53 hervor (Pfeil 76 in Figur 5), bis dieses mit seiner Stirnfläche an der Rückfläche 74 des zweiten Betätigungsgliedes 53 anlangt und durch diese an einer Weiterbewegung gehindert wird. Hierbei werden die Federmittel 44 komprimiert und gespannt.

Tritt im Betriebsablauf keine Störung ein, verbleibt das Ventilglied 11 in der Luftsparstellung gemäß Figur 5, bis der festgehaltene Gegenstand 23 wieder abgelegt werden soll. Hierzu wird dann das Ventilglied 11 in die aus Figuren 6 und 7 ersichtliche Ausblasstellung umgeschaltet. Dies geschieht durch Deaktivierung des zweiten Vorsteuerventils 7 und daraus resultierende Entlüftung der zweiten Vorsteuerkammer 57. Die weiterhin in der ersten Vorsteuerkammer 56 anstehende Steuerluft ruft dann durch Beaufschlagung der ersten Betätigungsfläche 54 eine Betätigungskraft hervor, durch die das Ventilglied 11 so weit verschoben wird, bis das zweite Betätigungsglied 53 an der Abschlussfläche 72 der zweiten Vorsteuerkammer 57 anstößt und das Ventilglied 11 an der Rückfläche 74 anliegt.

Ausgehend von der Grundstellung ist hier das Ventilglied 11 also in entgegengesetzter Richtung verlagert worden, wie beim Umschalten in die Arbeitsstellung. Die Grundstellung liegt also axial zwischen der Arbeitsstellung und der Ausblasstellung.

Damit das Umschalten in die Ausblasstellung möglich ist, ist die Auslegung der Ventileinrichtung 3 so getroffen, dass zwischen der dem Ventilglied 11 zugewandten Rückfläche 77 des ersten Betätigungsgliedes 52 und der dieser zugewandten axialen Begrenzungsfläche 78 der rückseitigen Kammer 47a ein dem Umschaltweg entsprechender Abstand "z" vorliegt, wenn sich das Ventilglied 11 in der Grundstellung befindet. Dieser axiale Abstand "z" wird beim Umschalten in die Ausblasstellung durch das erste Betätigungsglied 52 überbrückt.

Um jetzt in die normale Grundstellung zurückzukehren, genügt ein Deaktivieren des ersten Vorsteuerventils 6 zum Entlüften der ersten Vorsteuerkammer 56. Die Federmittel 44 können sich dann entspannen und das Ventilglied 11 von dem weiterhin in Anlage an der Abschlussfläche 72 bleibenden zweiten Betätigungsglied 53 abrücken, bis wieder der Ausgangsabstand "a" vorliegt.

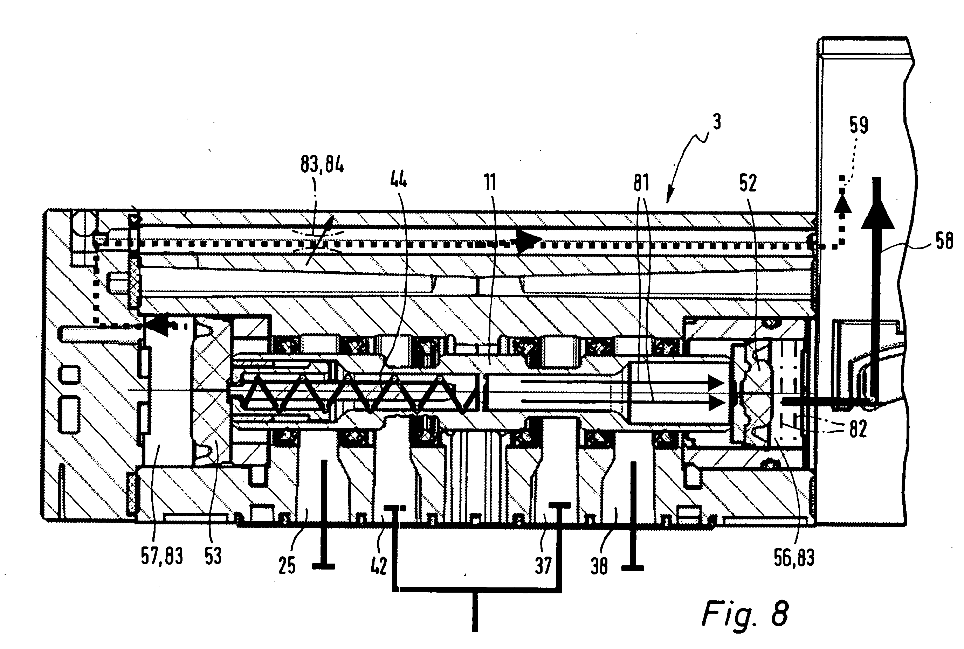

Tritt in der Luftsparstellung-gemäß Figur 5 ein Stromausfall auf, schalten beide Vorsteuerventile 6, 7 in ihre Grundstellung, also in die Entlüftungsstellung. Daraus resultiert der in Figur 8 veranschaulichte Effekt, wonach sich die bis dahin noch gespannten Federmittel 44 entspannen und das Ventilglied 11 gemäß Pfeilen 81 relativ zu dem an Ort und Stelle verbleibenden zweiten Betätigungsglied 53 in die Arbeitsstellung umschalten. Strichpunktiert bei 82 ist angedeutet, wie sich das dem Ventilglied 11 vorgelagerte erste Betätigungsglied 52 hierbei verlagert.

Somit wird erreicht, dass das System bei einem während der Luftsparstellung auftretenden Stromausfall aus Sicherheitsgründen in die Arbeitsstellung umschaltet und eine ständige Absaugwirkung in dem Saugraum 22 hervorruft, sodass ein daran haftender Gegenstand auch bei einer sehr langen Störungszeit nicht mangels Unterdruck herabfallen kann.

Maßgebend für das Zurückschalten in die Arbeitsstellung sind beim Ausführungsbeispiel gewisse verzögerungsmittel 83, die bei der kostengünstigsten Variante aus den unterschiedlichen Kammervolumina der beiden Vorsteuerkammern 56, 57 bestehen, die diese während der Luftsparstellung einnehmen. Nachdem die beiden Vorsteuerkammern 56, 57 in dieser Luftsparstellung zweckmäßigerweise die gleiche Länge aufweisen, resultieren die unterschiedlichen Kammervolumina vor allem aus den unterschiedlich großen Querschnitten der beiden Vorsteuerkammern 56, 57.

Eine Folge dieser unterschiedlichen Kammervolumina ist, dass bei einem Druckabfall eine unterschiedliche Entlüftungsdauer der beiden Vorsteuerkammern 56, 57 zu verzeichnen ist. Daher baut sich der in der zweiten Vorsteuerkammer 57 herrschende Restdruck langsamer ab als derjenige in der ersten Vorsteuerkammer 56. Dies bewirkt eine fluidische Abstützung des größeren zweiten Betätigungsgliedes 53, sodass die sich entspannenden Federmittel 44 das Ventilglied 11 relativ zu diesem abgestützten zweiten Betätigungsglied 53 in die Arbeitsstellung verlagern.

Es wäre natürlich auch denkbar, das zweite Betätigungsglied 53 auf andere Weise mechanisch zu fixieren, doch hat die geschilderte Bauform besondere Vorteile, weil sie keinerlei konstruktive Eingriffe an der Ventileinrichtung 3 erfordert. Von besonderem Vorteil ist auch, dass der Umschaltvorgang ohne elektrische Energie stattfindet und keine komplexe elektronische Steuerung benötigt wird.

In Figur 8 ist strichpunktiert angedeutet, dass die Verzögerungsmittel 83 bei Bedarf zusätzlich auch noch eine Drosseleinrichtung 84 beinhalten können, die in den zu der zweiten Vorsteuerkammer 57 führenden zweiten Vorsteuerkanal 59 eingeschaltet ist. Sie begrenzt zusätzlich die Ausströmrate der Druckluft. Um allerdings im Normalbetrieb ein verzögertes Umschalten in die Arbeitsstellung zu vermeiden, empfiehlt es sich, dieser Drosseleinrichtung 84 ein zur zweiten Vorsteuerkammer 57 hin öffnendes Rückschlagventil parallelzuschalten (nicht dargestellt).

## Patentansprüche

1. Vorrichtung zur Vakuumerzeugung, mit einer elektrisch betätigbaren Ventileinrichtung (3), deren Ventilglied (11) in der Lage ist, einen zur Speisung einer in einem Saugmittel (18) einen Unterdruck erzeugenden Ejektoreinrichtung (12) dienenden Arbeitskanal (38) wahlweise in einer Grundstellung von einem an eine Druckluftquelle anschließbaren Speisekanal (37) abzutrennen oder in einer Arbeitsstellung mit diesem Speisekanal (37) zu verbinden, **dadurch gekennzeichnet, dass** der Speisekanal (37) und der Arbeitskanal (38) zu einem elektropneumatisch vorgesteuerten Hauptventil (5) gehören, an dessen Ventilglied (11) zwei einander entgegengesetzt orientierte und jeweils eine Vorsteuerkammer (56, 57) begrenzende Betätigungsflächen (54, 55) unterschiedlicher Größe angreifen, die zum Umschalten zwischen der Grundstellung und der Arbeitsstellung durch je eines von zwei elektropneumatischen Vorsteuerventilen (6, 7) der Ventileinrichtung (3) mit in die jeweils zugeordnete Vorsteuerkammer (56, 57) eingespeister, unter einem Steuerdruck stehender Steuerluft beaufschlagbar sind, wobei die die größere Betätigungsfläche (55) beaufschlagende Steuerluft in Richtung der Arbeitsstellung wirkt, und dass das Ventilglied (11) durch Federmittel (44) axial nachgiebig bezüglich der größeren Betätigungsfläche (55) abgestützt ist, derart, dass das Ventilglied (11) ausgehend von der Arbeitsstellung durch gleichzeitige Steuerluftbeaufschlagung beider Betätigungsflächen (54, 55) relativ zu der ihre Position beibehaltenden größeren Betätigungsfläche (55) unter gleichzeitigem Spannen der Federmittel (44) in die Grundstellung verlagerbar ist und im Falle eines anschließend von den Vorsteuerventilen (6, 7) in beiden Vorsteuerkammern (56, 57) verursachten Abfalls des Steuerdruckes durch die sich wieder entspannenden Federmittel (44) in die Arbeitsstellung zurückgeschaltet wird.

2. Vorrichtung nach Anspruch 1, **dadurch gekennzeichnet, dass** Verzögerungsmittel (83) vorhanden sind, die bei gleichzeitiger Entlüftung der beiden Vorsteuerkammern (56, 57) eine unterschiedliche Entlüftungsdauer der in den beiden Vorsteuerkammern (56, 57) befindlichen Steuerluft hervorrufen und daraus resultierend eine fluidische Abstützung der größeren Betätigungsfläche (55), sodass die sich entspannenden Federmittel (44) das Ventilglied (11) relativ zu der größeren Betätigungsfläche (55) in die Arbeitsstellung zurückschalten können, wobei zweckmäßigerweise die Verzögerungsmittel (83) unterschiedlich große Kammervolumina der Vorsteuerkammern (56, 57) bei in der vorgespannten Grundstellung befindlichem Ventilglied (11) umfassen und/oder die Vorsteuerkammern (56, 57) in der vorgespannten Grundstellung die gleiche Länge und, bedingt durch die unterschiedlich großen Betätigungsflächen (54, 55), unterschiedlich große Querschnitte aufweisen.

3. Vorrichtung nach Anspruch 2, **dadurch gekennzeichnet, dass** die beiden Vorsteuerkammern (56, 57) über je einen Vorsteuerkanal (58, 59) an eines der Vorsteuerventile (6, 7) angeschlossen sind, wobei die Verzögerungsmittel (83) eine Auslegung der Vorsteuerkanäle (58, 59) für unterschiedliche Entlüftungs-Strömungsraten vorsehen, insbesondere durch Einschaltung einer Drosseleinrichtung (84) in den zu der von der größeren Betätigungsfläche (55) begrenzten Vorsteuerkammer (57) führenden Vorsteuerkanal (55, 59).

4. Vorrichtung nach einem der Ansprüche 1 bis 3, **dadurch gekennzeichnet, dass** die Federmittel (44) mechanische Federmittel sind, wobei sie insbesondere als Schraubendruckfeder ausgebildet sind.

5. Vorrichtung nach einem der Ansprüche 1 bis 4, **dadurch gekennzeichnet, dass** die größere Betätigungsfläche (55) dem Ventilglied (11) axial vorgelagert ist.

6. Vorrichtung nach einem der Ansprüche 1 bis 5, **dadurch gekennzeichnet, dass** die größere Betätigungsfläche (55) an einem aufgrund der Nachgiebigkeit der Federmittel (44) relativ zum Ventilglied (11) bewegbaren Betätigungsglied (53) angeordnet ist.

7. Vorrichtung nach einem der Ansprüche 1 bis 6, **dadurch gekennzeichnet, dass** die Federmittel (44) zumindest teilweise im Innern des Ventilgliedes (11) aufgenommen sind.

8. Vorrichtung nach einem der Ansprüche 1 bis 7, **dadurch gekennzeichnet, dass** sich die Federmittel (44) zum einen an dem Ventilglied (11) und zum anderen an einem axial verschiebbar mit dem Ventilglied (11) in Eingriff stehenden Schubglied (65) abstützen, wobei das Schubglied (65) mit der größeren Betätigungsfläche (55) in Wirkverbindung steht und zweckmäßigerweise durch Anschlagmittel (68) in seinem Ausfahrhub bezüglich des Ventilglieds (11) begrenzt ist.

9. Vorrichtung nach Anspruch 8, **dadurch gekennzeichnet, dass** das Schubglied (65) zumindest partiell hülsenförmig ausgebildet ist und einen Endabschnitt der andererseits in das Ventilglied (11) eintauchenden Federmittel (44) aufnimmt.

10. Vorrichtung nach einem der Ansprüche 1 bis 9, **dadurch gekennzeichnet, dass** die Arbeitsstellung des Ventilgliedes (11) **dadurch** definiert ist, dass ein die größere Betätigungsfläche (55) aufweisendes Betätigungsglied (53) an einer fest an einem Ventilgehäuse (28) der Ventileinrichtung (3) angeordneten Anschlagfläche zur Anlage gelangt, ohne die Federmittel (44) zu spannen.

11. Vorrichtung nach einem der Ansprüche 1 bis 10, **dadurch gekennzeichnet, dass** das Hauptventil (5) zusätzlich einen weiteren, an eine Druckluftquelle anschließbaren Speisekanal (42) und einen an das Saugmittel (18) anschließbaren Ausblaskanal (25) enthält, die durch das Ventilglied (11) wahlweise voneinander abtrennbar oder miteinander verbindbar sind, wobei diese beiden Kanäle (42, 25) sowohl in der Grundstellung als auch in der Arbeitsstellung des Ventilgliedes (11) voneinander getrennt sind und wobei das Ventilglied (11) durch Steuerluftbeaufschlagung der kleineren Betätigungsfläche (54) in eine Ausblasstellung bewegbar ist, in der der Ausblaskanal (25) mit dem weiteren Speisekanal (42) verbunden und gleichzeitig der andere Speisekanal (37) vom Arbeitskanal (38) abgetrennt ist.

12. Vorrichtung nach Anspruch 11, **dadurch gekennzeichnet, dass** die Grundstellung des Ventilgliedes (11) axial zwischen der Arbeitsstellung und der Ausblasstellung liegt.

13. Vorrichtung nach Anspruch 11 oder 12, **dadurch gekennzeichnet, dass** die Federmittel (44) aufgrund dessen, dass sich die größere Betätigungsfläche (55) am Ventilgehäuse (28) der Ventileinrichtung (3) abstützt, in der Ausblasstellung des Ventilgliedes (11) gespannt sind, sodass sie bei anschließender Druckentlastung der kleineren Betätigungsfläche (54) das Ventilglied (11) in die Grundstellung zurückschalten.

14. Vorrichtung nach einem der Ansprüche 1 bis 13, **dadurch gekennzeichnet, dass** die Ventileinrichtung (3) an einer Arbeitseinheit (2) angeordnet ist, die zumindest eine Ejektoreinrichtung (12) aufweist, die eingangsseitig mit dem Speisekanal (37) verbunden ist und an deren Saugausgang (14) das Saugmittel (18) angeschlossen oder anschließbar ist,

15. Vorrichtung nach Anspruch 14, **dadurch gekennzeichnet, dass** an den Saugausgang (14) der Ejektoreinrichtung (12) ein zur Ejektoreinrichtung (12) hin öffnendes Rückschlagventil (24) angeschlossen ist, wobei zweckmäßigerweise an eine an den Saugausgang (14) angeschlossene Saugleitung (17), an einer dem Rückschlagventil nachgeordneten Stelle, der Ausblaskanal (25) angeschlossen ist.

16. Vorrichtung nach einem der Ansprüche 1 bis 15, **dadurch gekennzeichnet, dass** die beiden Vorsteuerventile (6, 7) als 3/2-Wegeventile ausgebildet sind, die im elektrisch unbetätigten Zustand eine die zugeordnete Vorsteuerkammer (56, 57) entlüftende Entlüftungsstellung und im elektrisch aktivierten Zustand eine die zugeordnete Vorsteuerkammer (56, 57) mit Steuerluft versorgende Speisestellung einnehmen.

## Claims

1. Apparatus for vacuum generation with an electrically connectable valve device (3), the valve member (11) of which is able either, in a normal position, to isolate an operating passage (38) serving to supply an ejector device (12) generating a vacuum in a suction means (18) from a feed passage (37) connectable to a compressed air source or, in an operating position, to connect with this feed passage (37), **characterised in that** the feed passage (37) and the operating passage (38) belong to an electro-pneumatic piloted main valve (5) on the valve member (11) of which act two actuating surfaces (54, 55) of different size and each bounding a pilot chamber (56, 57) and which may be pressurised to switch between the normal position and the operating position by means in each case of one of two electro-pneumatic pilot valves (6, 7) of the valve unit (3) by control air standing under a control pressure fed into the respectively assigned pilot chamber (56, 57), wherein the control air impacting on the larger actuating surface (55) acts in the direction of the operating position, and that the valve member (11) is supported by spring means (44) with axial resilience relative to the larger actuating surface (55) in such a way that the valve member (11) starting from the operating position may be shifted into the normal position through simultaneous control air pressurisation of both actuating surfaces (54, 55) relative to the larger actuating surface (55) maintaining its position, under simultaneous tensioning of the spring means (44) and, in the case of a subsequent drop in the control pressure caused by the pilot valves (6, 7) in both pilot chambers (56, 57), is reset into the operating position by the spring means (44) once more relaxing.

2. Apparatus according to claim 1, **characterised in that** retarding means (83) are provided which, with simultaneous venting of the two pilot chambers (56, 57), generate a different duration of venting of the control air in the two pilot chambers (56, 57), resulting in fluidic support of the larger actuating surface (55), so that the relaxing spring means (44) are able to reset the valve member (11) into the operating position relative to the larger actuating surface (55), wherein expediently the retarding means (83) comprise the pilot chambers (56, 57) having chamber volumes of different size with the valve member (11) in the preloaded normal position and/or the pilot chambers (56, 57) in the preloaded normal position are of the same length and, due to the different size of the actuating surfaces (54, 55), have cross-sections of varying size.

3. Apparatus according to claim 2, **characterised in that** the two pilot chambers (56, 57) are connected in each case via a pilot passage (58, 59) to one of the pilot valves (6, 7), while the retarding means (83) provide a design of the pilot passages (58, 59) for different venting flow rates, in particular by inserting a restrictor device (84) into the pilot passage (55, 59) leading to the pilot chamber (57) bounded by the larger actuating surface (55).

4. Apparatus according to any of claims 1 to 3, **characterised in that** the spring means (44) are mechanical spring means, in particular in the form of helical compression springs.

5. Apparatus according to any of claims 1 to 4, **characterised in that** the larger actuating surface (55) is mounted axially in front of the valve member (11).

6. Apparatus according to any of claims 1 to 5, **characterised in that** the larger actuating surface (55) is provided on an actuating element (53) which is movable relative the the valve member (11) owing to the resilience of the spring means (44).

7. Apparatus according to any of claims 1 to 6, **characterised in that** the spring means (44) are accommodated at least partly inside the valve member (11).

8. Apparatus according to any of claims 1 to 7, **characterised in that** the spring means (44) are supported at one end on the valve member (11) and at the other end on an axially sliding thrust member (65) which engages with the valve member (11), wherein the thrust member (65) is in active connection with the larger actuating surface (55) and is expediently limited by stop means (68) in its outwards stroke relative the the valve member (11).

9. Apparatus according to claim 8, **characterised in that** the thrust member (65) is at least partially sleeve-like and accommodates an end section of the spring means (44) which at the other end dip into the valve member (11).

10. Apparatus according to any of claims 1 to 9, **characterised in that** the operating position of the valve member (11) is defined by an actuating element (53) with the larger actuating surface (55) coming into contact with a stop face fixed to a valve casing (28) of the valve device (3), without tensioning the spring means (44).

11. Apparatus according to any of claims 1 to 10, **characterised in that** the main valve (5) also contains an additional feed passage (42) connectable to a compressed air source and an exhaust passage (25) connectable to the suction means (18), which may be either isolated from or connected to one another, wherein these two passages (42, 25) are isolated from one another both in the normal position and in the operating position of the valve member (11), and wherein the valve member (11) may be moved by control air pressurisation of the smaller actuating surface (54) into an exhaust position in which the exhaust passage (25) is connected to the additional feed passage (42) and at the same time the other feed passage (37) is cut off from the operating passage (38).

12. Apparatus according to claim 11, **characterised in that** the normal position of the valve member (11) lies axially between the operating position and the exhaust position.

13. Apparatus according to claim 11 or 12, **characterised in that** the spring means (44), due to the fact that the larger actuating surface (55) rests on the valve casing (28) of the valve device (3), are tensioned in the exhaust position of the valve member (11), so that they reset the valve member (11) into the normal position in the event of subsequent relief of pressure on the smaller actuating surface (54).

14. Apparatus according to any of claims 1 to 13, **characterised in that** the valve device (3) is provided on an operating unit (2) which has at least one ejector device (12) which is connected on the input side to the feed passage (37), and the suction outlet (14) of which is connected or connectable to the suction means (18).

15. Apparatus according to claim 14, **characterised in that** there is connected to the suction outlet (14) of the ejector device (12) a non-return valve (24) opening towards the ejector device (12), wherein expediently the exhaust passage (25) is connected to a suction line (17) connected to the suction outlet (14), at a point downstream of the non-return valve.

16. Apparatus according to any of claims 1 to 15, **characterised in that** the two pilot valves (6, 7) are in the form of 3/2-way valves which in the electrically unactuated state assume a venting position which vents the assigned pilot chamber (56, 57), and in the electrically activated state assume a feed position supplying the assigned pilot chamber (56, 57) with control air.

## Revendications

1. Dispositif de production d'un vide avec un dispositif à soupape (3) pouvant être actionné électriquement, dont l'organe de soupape (11) est en mesure de séparer un canal de travail (38) servant à l'alimentation d'un dispositif d'éjection (12) générant une dépression dans un moyen d'aspiration (18) au choix dans une position de base d'un canal d'alimentation (37) pouvant être raccordé à une source d'air comprimé ou de le relier dans une position de travail à ce canal d'alimentation (37), **caractérisé en ce que** le canal d'alimentation (37) et le canal de travail (38) appartiennent à une soupape principale (5) précommandée électropneumatiquement, sur l'organe de soupape (11) de laquelle agissent deux surfaces d'actionnement (54, 55) délimitant respectivement une chambre de précommande (56, 57) et orientées de manière opposée de taille différente qui peuvent être alimentées pour la commutation entre la position de base et la position de travail chacune par l'une des deux soupapes de précommande (6, 7) électropneumatiques du dispositif à soupape (3) en air de commande se trouvant sous une pression de commande, injecté dans la chambre de précommande associée respectivement (56, 57), l'air de commande sollicitant la plus grande surface d'actionnement (55) agissant en direction de la position de travail et **en ce que** l'organe de soupape (11) est soutenu par des moyens de ressort (44) de manière axialement flexible par rapport à la plus grande surface d'actionnement (55) de telle sorte que l'organe de soupape (11) puisse être déplacé en partant de la position de travail par alimentation simultanée en air de commande des deux surfaces d'actionnement (54, 55) par rapport à la plus grande surface d'actionnement (55) conservant sa position sous tension simultanée des moyens de ressort (44) dans la position de base et dans le cas d'une chute de la pression de commande causée ensuite par les soupapes de précommande (6, 7) dans les deux chambres de précommande (56, 57), est recommuté par les moyens de ressort (44) se redétendant dans la position de travail.

2. Dispositif selon la revendication 1, **caractérisé en ce que** des moyens de temporisation (83) sont présents, lesquels suscitent lors de la ventilation simultanée des deux chambres de précommande (56, 57), une durée de ventilation différente de l'air de commande se trouvant dans les deux chambres de précommande (56, 57) et par conséquent, un appui fluidique de la plus grande surface d'actionnement (55) de sorte que les moyens de ressort (44) se détendant puissent recommuter l'organe de soupape (11) par rapport à la plus grande surface d'actionnement (55) dans la position de travail, les moyens de temporisation (83) comportant de manière appropriée des volumes de chambres de précommande (56, 57) de grandeur différente lorsque l'organe de soupape (11) se trouve dans la position de base précontrainte et/ou les chambres de précommande (56, 57) présentant dans la position de base précontrainte, la même longueur et en raison des surfaces d'actionnement (54, 55) différemment grandes, des sections transversales de grandeur différente.

3. Dispositif selon la revendication 2, **caractérisé en ce que** les deux chambres de précommande (56, 57) sont raccordées chacune par un canal de précommande (58, 59) à l'une des soupapes de précommande (6, 7), les moyens de temporisation (83) prévoyant une conception des canaux de précommande (58, 59) pour des débits de ventilation différents, en particulier par le montage d'un dispositif d'étranglement (84) dans le canal de précommande (55, 59) menant à la chambre de précommande (57) délimitée par la plus grande surface d'actionnement (55).

4. Dispositif selon l'une quelconque des revendications 1 à 3, **caractérisé en ce que** les moyens de ressort (44) sont des moyens de ressort mécaniques, ceux-ci étant réalisés en particulier comme des ressorts de pression cylindriques.

5. Dispositif selon l'une quelconque des revendications 1 à 4, **caractérisé en ce que** la plus grande surface d'actionnement (55) est logée axialement en amont de l'organe de soupape (11).

6. Dispositif selon l'une quelconque des revendications 1 à 5, **caractérisé en ce que** la plus grande surface d'actionnement (55) est disposée sur un organe d'actionnement (53) mobile en raison de la flexibilité des moyens de ressort (44) par rapport à l'organe de soupape (11).

7. Dispositif selon l'une quelconque des revendications 1 à 6, **caractérisé en ce que** les moyens de ressort (44) sont reçus au moins en partie à l'intérieur de l'organe de soupape (11).

8. Dispositif selon l'une quelconque des revendications 1 à 7, **caractérisé en ce que** les moyens de ressort (44) s'appuient d'une part sur l'organe de soupape (11) et d'autre part sur un organe de poussée (65) se trouvant en engagement de manière axialement mobile avec l'organe de soupape (11), l'organe de poussée (65) se trouvant en liaison active avec la plus grande surface d'actionnement (55) et étant limité de manière appropriée par des moyens de butée (68) dans sa course de déploiement par rapport à l'organe de soupape (11).

9. Dispositif selon la revendication 8, **caractérisé en ce que** l'organe de poussée (65) est réalisé au moins en partie en forme de douille et reçoit une section d'extrémité des moyens de ressort (44) pénétrant d'un autre côté dans l'organe de soupape (11).

10. Dispositif selon l'une quelconque des revendications 1 à 9, **caractérisé en ce que** la position de travail de l'organe de soupape (11) est définie du fait qu'un organe d'actionnement (53) présentant la plus grande surface d'actionnement (55) parvienne en appui contre une surface de butée disposée fixement sur un boîtier de soupape (28) du dispositif à soupape (3) sans tendre les moyens de ressort (44).

11. Dispositif selon l'une quelconque des revendications 1 à 10, **caractérisé en ce que** la soupape principale (5) contient en outre un autre canal d'alimentation (42) pouvant être raccordé à une source d'air comprimé et un canal de purge (25) pouvant être raccordé au moyen d'aspiration (18), lesquels canaux peuvent être séparés l'un de l'autre ou reliés l'un à l'autre au choix par l'organe de soupape (11), ces deux canaux (42, 25) étant séparés l'un de l'autre aussi bien dans la position de base que dans la position de travail de l'organe de soupape (11) et l'organe de soupape (11) pouvant être déplacé par l'alimentation en air de commande de la plus petite surface d'actionnement (54) dans une position de purge, dans laquelle le canal de purge (25) est relié à l'autre canal d'alimentation (42) et l'autre canal d'alimentation (37) est séparé en même temps du canal de travail (38).

12. Dispositif selon la revendication 11, **caractérisé en ce que** la position de base de l'organe de soupape (11) se trouve axialement entre la position de travail et la position de purge.

13. Dispositif selon la revendication 11 ou 12, **caractérisé en ce que** les moyens de ressort (44), en raison desquels la plus grande surface d'actionnement (55) s'appuie sur le boîtier de soupape (28) du dispositif à soupape (3), sont tendus dans la position de purge de l'organe de soupape (11) de sorte qu'ils recommutent en cas de décompression consécutive de la plus petite surface d'actionnement (54), l'organe de soupape (11) dans la position de base.

14. Dispositif selon l'une quelconque des revendications 1 à 13, **caractérisé en ce que** le dispositif à soupape (3) est disposé sur une unité de travail (2) qui présente au moins un dispositif d'éjection (12) qui est relié côté entrée au canal d'alimentation (37) et à la sortie d'aspiration duquel (14), le moyen d'aspiration (18) est ou peut être raccordé.

15. Dispositif selon la revendication 14, **caractérisé en ce qu'**à la sortie d'aspiration (14) du dispositif d'éjection (12) est raccordé un clapet antiretour (24) ouvrant vers le dispositif d'éjection (12), à une conduite d'aspiration (17) raccordée à la sortie d'aspiration (14) étant raccordé le canal de purge (25) de manière appropriée à un endroit disposé en aval du clapet antiretour.

16. Dispositif selon l'une quelconque des revendications 1 à 15, **caractérisé en ce que** les deux soupapes de précommande (6, 7) sont réalisées comme des soupapes à 3/2 voies qui occupent, à l'état non actionné électriquement, une position de ventilation ventilant la chambre de précommande associée (56, 57) et à l'état activé électriquement, une position d'alimentation alimentant la chambre de précommande associée (56, 57) en air de commande.
